# EUROPEAN PATENT APPLICATION

(11) **EP 4 317 244 A1**
(43) Date of publication of application: **07.02.2024**
(21) Application number: 22799155.1
(22) Date of filing: 06.05.2022
(51) Int. Cl.: C08G 63/06, C08G 63/78, C08G 63/85, C08G 63/87

(54) **BRANCHED POLY(3-HYDROXYPROPIONIC ACID) POLYMER, AND METHOD FOR PREPARATION THEREOF**

(30) Priority: 06.05.2021 KR 20210058832; 04.05.2022 KR 20220055701
(71) Applicant: LG Chem, Ltd., Seoul 07336 (KR)
(72) Inventor: LEE, Yeonju, Daejeon 34122 (KR); CHOI, Jung Yun, Daejeon 34122 (KR); KIM, Chul Woong, Daejeon 34122 (KR); CHO, Suhyun, Daejeon 34122 (KR); KIM, Kyeongmin, Daejeon 34122 (KR)
(74) Representative: Goddar, Heinz J.
(86) International application number: PCT/KR2022/006488
(87) International publication number: WO 2022/235112

(57) **Abstract**

A novel branched poly(3-hydroxypropionic acid)polymer and a method for preparation thereof according to the present disclosure can effectively prepare a polymer that achieves excellent production yield while maintaining the intrinsic physical properties of poly(3-hydroxypropionic acid).

## Description

### [TECHNICAL FIELD]

### CROSS-REFERENCE TO RELATED APPLICATION(S)

This application claims the benefit of Korean Patent Application No. 10-2021-0058832 filed on May 6, 2021 and Korean Patent Application No. 10-2022-0055701 filed on May 4, 2022 in the Korean Intellectual Property Office, the entire contents of which are incorporated herein by reference.

The present disclosure relates to a novel branched poly(3 -hydroxypropionic acid)polymer, and a method for preparation thereof.

### [BACKGROUND ART]

Poly(3-hydroxypropionic acid), which is a biodegradable polymer, not only has the property of being not easily broken but also has excellent mechanical properties, and therefore, is attracting attention as an environmentally friendly material.

Poly(3-hydroxypropionic acid) is prepared by performing a polycondensation of 3-hydroxypropionic acid (3-HP) which is a monomer, but in consideration of industrial application possibilities, poly(3-hydroxypropionic acid) having excellent thermal stability should be prepared However, an ester structure is contained in the chain of poly(3-hydroxypropionic acid), and the ester structure has the thermal decomposition temperature of about 220°C, whereby there is a limit to improve the thermal stability.

In addition, a high-molecular weight poly(3-hydroxypropionate) can be prepared to improve thermal stability, but in the process of performing a polycondensation of 3-hydroxypropionic acid, a low-molecular weight cyclic structure is generated, whereby not only poly(3-hydroxypropionate) having a high molecular weight cannot be produced but also the production yield of poly(3-hydroxypropionate) is reduced.

In order to improve the structural limitations, research is underway to produce copolymers with other monomers, but there is a problem that it is difficult to produce a resin that can realize an excellent production yield while maintaining the intrinsic physical properties of poly(3-hydroxypropionic acid).

### [DETAILED DESCRIPTION OF THE INVENTION]

### [Technical Problem]

It is an object of the present disclosure to provide a novel branched poly(3-hydroxypropionic acid)polymer exhibiting excellent physical properties and a method for preparation thereof.

### [Technical Solution]

First, in the present disclosure, the term "substituted or unsubstituted" means being unsubstituted or substituted with one or more substituents selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; or a heterocyclic group containing at least one of N, O and S atoms, or being unsubstituted or substituted with a substituent to which two or more substituents of the above-exemplified substituents are linked. For example, "a substituent in which two or more substituents are linked" may be a biphenyl group. Namely, a biphenyl group may be an aryl group, or it may be interpreted as a substituent in which two phenyl groups are connected

In the present disclosure, the carbon number of a carbonyl group is not particularly limited, but is preferably 1 to 40. A specific example thereof may be a compound having the following structural formulas, but is not limited thereto.

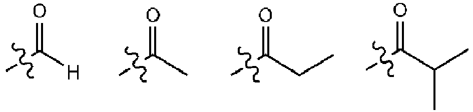

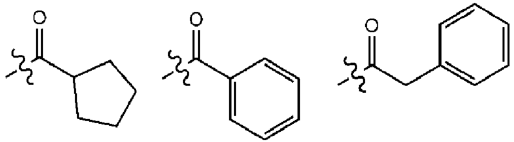

In the present disclosure, an ester group may have a structure in which oxygen of the ester group may be substituted by a straight-chain, branched-chain, or cyclic alkyl group having 1 to 25 carbon atoms, or an aryl group having 6 to 25 carbon atoms. A specific example thereof may be a compound having the following structural formulas, but is not limited thereto.

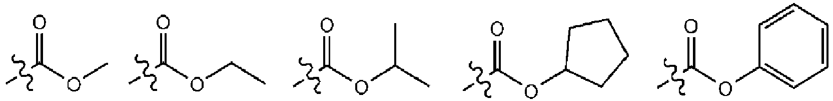

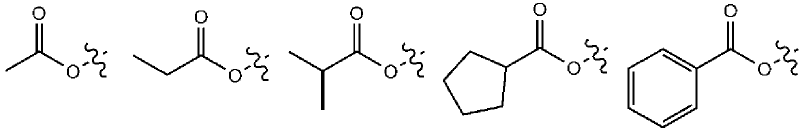

In the present disclosure, the carbon number of an imide group is not particularly limited, but is preferably 1 to 25. A specific example thereof may be a compound having the following structural formulas, but is not limited thereto.

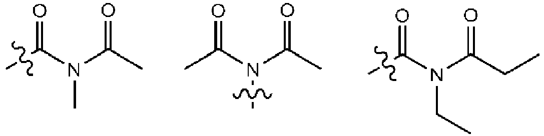

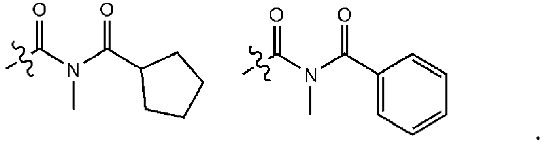

In the present disclosure, a silyl group specifically includes a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but is not limited thereto.

In the present disclosure, a boron group specifically includes a trimethylboron group, a triethylboron group, a t-butyldimethylboron group, a triphenylboron group, and a phenylboron group, but is not limited thereto.

In the present disclosure, examples of a halogen group include fluorine, chlorine, bromine, or iodine.

In the present disclosure, the alkyl group may be straight-chain or branched-chain, and the carbon number thereof is not particularly limited, but is preferably 1 to 40. According to one embodiment, the carbon number of the alkyl group is 1 to 20. According to another embodiment, the carbon number of the alkyl group is 1 to 10. According to yet another embodiment, the carbon number of the alkyl group is 1 to 6. Specific examples of the alkyl group include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 2-methylpentyl, 4-methylhexyl, 5-methylhexyl, and the like, but are not limited thereto.

In the present disclosure, the alkenyl group may be straight-chain or branched-chain, and the carbon number thereof is not particularly limited, but is preferably 2 to 40. According to one embodiment, the carbon number of the alkenyl group is 2 to 20. According to another embodiment, the carbon number of the alkenyl group is 2 to 10. According to still another embodiment, the carbon number of the alkenyl group is 2 to 6. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present disclosure, a cycloalkyl group is not particularly limited, but the carbon number thereof is preferably 3 to 60. According to one embodiment, the carbon number of the cycloalkyl group is 3 to 30. According to another embodiment, the carbon number of the cycloalkyl group is 3 to 20. According to still another embodiment, the carbon number of the cycloalkyl group is 3 to 6. Specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but are not limited thereto.

In the present disclosure, an aryl group is not particularly limited, but the carbon number thereof is preferably 6 to 60, and it may be a monocyclic aryl group or a polycyclic aryl group. According to one embodiment, the carbon number of the aryl group is 6 to 30. According to one embodiment, the carbon number of the aryl group is 6 to 20. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, a fluorenyl group, and the like, but is not limited thereto.

In the present disclosure, the fluorenyl group may be substituted, and two substituents may be linked with each other to form a spiro structure. In the case where the fluorenyl group is substituted, 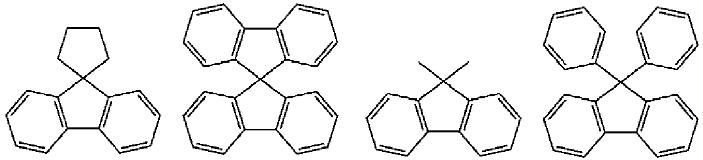 and the like can be formed However, the structure is not limited thereto.

In the present disclosure, a heterocyclic group is a heterocyclic group containing at least one of O, N, Si and S as a heteroatom, and the carbon number thereof is not particularly limited, but is preferably 2 to 60. Examples of the heterocyclic group include a thiophene group, a furan group, a pyrrole group, an imidazole group, a thiazole group, an oxazol group, an oxadiazol group, a triazol group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyridopyrimidinyl group, a pyridopyrazinyl group, a pyrazinopyrazinyl group, an isoquinoline group, an indole group, a carbazole group, a benzoxazole group, a benzoimidazole group, a benzothiazol group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, and the like, but are not limited thereto.

In the present disclosure, the aryl group in the aralkyl group, the aralkenyl group, the alkylaryl group and the arylamine group is the same as the aforementioned examples of the aryl group. In the present disclosure, the alkyl group in the aralkyl group, the alkylaryl group and the alkylamine group is the same as the aforementioned examples of the alkyl group. In the present disclosure, the heteroaryl in the heteroarylamine can be applied to the aforementioned description of the heterocyclic group. In the present disclosure, the alkenyl group in the aralkenyl group is the same as the aforementioned examples of the alkenyl group. In the present disclosure, the aforementioned description of the aryl group may be applied except that the arylene is a divalent group. In the present disclosure, the aforementioned description of the heterocyclic group can be applied except that the heteroarylene is a divalent group. In the present disclosure, the aforementioned description of the aryl group or cycloalkyl group can be applied except that the hydrocarbon ring is not a monovalent group but formed by combining two substituent groups. In the present disclosure, the aforementioned description of the heterocyclic group can be applied, except that the heterocycle is not a monovalent group but formed by combining two substituent groups.

In order to achieve the above object, according to the present disclosure, there is provided a branched poly(3-hydroxypropionic acid)polymer represented by the following Chemical Formula 1:

[Chemical Formula 1] R-[A-(B)n]ₖ

wherein, in Chemical Formula 1,
R is a trivalent or higher functional group derived from a polyfunctional monomer,
A is a direct bond, or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 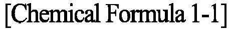 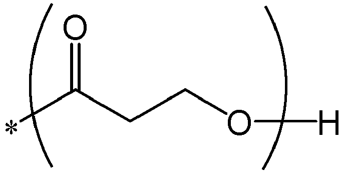 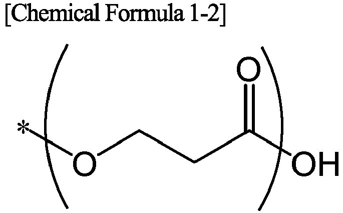
wherein,
   * is a moiety connected to A,
   k is an integer of 3 or more, and
   n is an integer of 1 to 700.

Also, according to the present disclosure, there is provided a method for preparing a branched poly(3-hydroxypropionic acid)copolymer, the method comprising polymerizing 3-hydroxypropionic acid or β-propiolactone with a polyfunctional monomer to prepare the branched poly(3-hydroxypropionic acid) polymer represented by Chemical Formula 1.

Further, according to the present disclosure, there is provided a branched poly(3-hydroxypropionic acid)copolymer comprising the branched poly(3-hydroxypropionic acid) polymer structure.

Poly(3-hydroxypropionic acid) is required to have a high molecular weight in order to improve its industrial applicability, but there was a problem that in the process of performing a polycondensation of 3-hydroxypropionic acid to prepare a high-molecular weight poly(3-hydroxypropionic acid), not only a low-molecular weight cyclic structure is generated, and thus, the high-molecular weight poly(3-hydroxypropionic acid) cannot be prepared, but also the production yield of poly(3-hydroxypropionic acid) is reduced In addition, in the case of forming a copolymer with other monomers, there is a problem that its intrinsic physical properties are lowered or an additional process requiring separation of by-products is necessary.

Therefore, the present inventors have found that when a novel branched poly(3-hydroxypropionic acid) polymers is formed using unique polyfunctional monomers, it has excellent physical properties and is also excellent in the synthesis yield, and completed the present disclosure.

In particular, the inventors have found that due to the introduction of the novel branched structure, the viscosity drops sharply at a high shear rate, which improves the processability of the resin, and also the crystallinity can be lowered by the structure to compensate for the brittleness, and completed the present disclosure.

Now, the novel polymer structure of the present disclosure and a method for preparing the same will be described in detail.

### (Branched poly(3-hydroxypropionic acid)polymer)

In one embodiment of the present disclosure, the branched poly(3-hydroxypropionic acid)polymer is represented by the following Chemical Formula 1:

[Chemical Formula 1] R-[A-(B)n]ₖ

wherein, in Chemical Formula 1,
R is a trivalent or higher functional group derived from a polyfunctional monomer,
A is a direct bond, or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 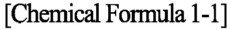 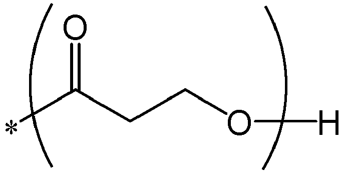 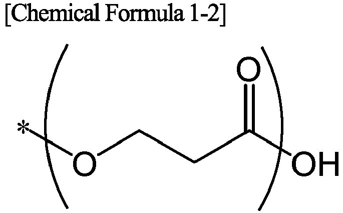 wherein,
   * is a moiety connected to A,
   k is an integer of 3 or more, and
   n is an integer of 1 to 700.

As used herein, the term "branched" means a polymer of monomers each having three or more functional groups, and the R moiety in Chemical Formula 1 is defined as a branched structure. For example, it means the structure of: 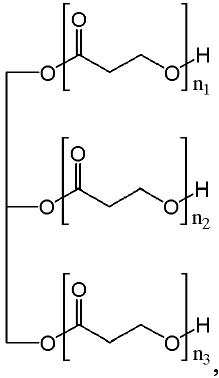 and the like, but is not limited thereto.

Preferably, k is an integer of 3 to 10 or 3 to 8.

Preferably, the R is a trivalent or higher linking group derived from a substituted or unsubstituted C₁₋₆₀ alkyl, a substituted or unsubstituted C₃₋₆₀ cycloalkyl, a substituted or unsubstituted C₆₋₆₀ aryl or a substituted or unsubstituted C₂₋₆₀ heteroaryl containing at least one of N, O and S, wherein at least one of the carbon atoms of the alkyl, cycloalkyl, aryl and heteroaryl is unsubstituted or substituted with at least one heteroatom selected from the group consisting of N, O and S, or carbonyl.

The polymer is obtained by subjecting 3-hydroxypropionic acid and a polyfunctional monomer to a condensation polymerization, or is obtained by subjecting β-propiolactone and a polyfunctional monomer to a ring-opening polymerization. The polyfunctional monomer may include, preferably, glycerol, pentaerythritol, 3-arm-poly(ethyleneglycol)_{n=2~15}, 4-arm-poly(ethyleneglycol)_{n=2~10}, di(trimethylolpropane), tripentaerythritol, xylitol, sorbitol, inositol, cholic acid, β -cyclodextrin, tetrahydroxyperylene, 2,2'-bis(hydroxymethyl)butyric acid (BHB), pyridinetetraamine (PTA), diethyltriaminepentaacetic acid, melamine, propane-1,2,3-triamine, tetraacetylene pentaamine, benzene-1,3,5-triamine, toluene-2,4,6-triisocyanate, 2-isocyanatoethyl-2,6-diisocyanatocaproate, triphenyl ethane-4,4,4-triisocyanate, trimethylolpropane, triethanolamine, triglycidyl, s-triazine-1,3,5-triethanol ether, and the like.

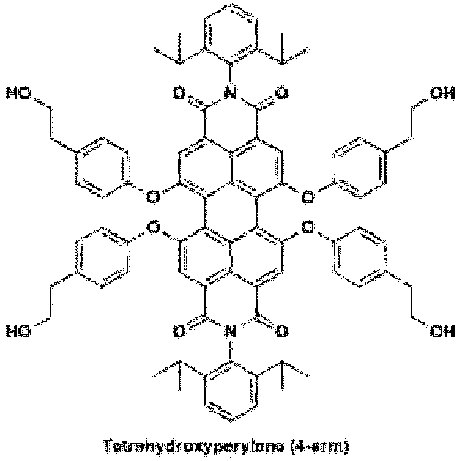

The polymer can be obtained by performing a condensation polymerization of 0.1 mol% to 20 mol% of a polyfunctional monomer with respect to the content of each of 3-hydroxypropionic acid or β-propiolactone. Preferably, the polyfunctional monomer can be used in the content of 0.1 mol% to 15 mol%, 0.5 mol% to 10 mol% or 1 mol% to 8 mol%, 0.1 mol% or more, 0.5 mol% or more, or 1.0 mol% or more, or 15 mol% or less, 10 mol% or less, or 8 mol% or less. The monomer can be used in the above content range to form a polymer having a desired novel branched structure, which is thus preferable.

The polymer may have a weight average molecular weight (Mw) of 1,000 to 100,000, preferably 1,500 to 80,000, 1,900 to 50,000, 2,000 to 40,000, or 5,000 to 30,000, 1,500 or more, 1,900 or more, 2,000 or more, or 2,000 or more, 80,000 or less, 50,000 or less, 40,000 or less, or 30,000 or less.

The polymer may have a number average molecular weight (Mn) of 500 to 50,000, preferably 700 to 30,000, 1,000 to 10,000, 1,100 to 7,000, or 1,200 to 5,500, or 700 or more, 1,000 or more, 1,100 or more, or 1,200 or more, or 30,000 or less, 10,000 or less, 7,000 or less, or 5,500 or less.

The polymer may have a polydispersity index (PDI) of 1.80 to 13.0, preferably 1.85 to 12.8, 1.85 to 12.55, or 2.0 to 12.0, 1.85 or more, 1.90 or more, 1.95 or more, or 2.0 or more, or 12.8 or less, 12.55 or less, or 12.3 or less, or 12.0 or less.

Methods for measuring the weight average molecular weight, number average molecular weight, and polydispersity index will be described in detail in the Experimental Examples described hereinafter.

### (Method for preparing branched poly(3-hydroxypropionic acid)polymer)

According to another embodiment of the disclosure, a method for preparing the branched poly(3-hydroxypropionic acid)polymer is provided

Specifically, the method comprises a step of polymerizing 3-hydroxypropionic acid or β-propiolactone with a polyfunctional monomer to prepare a branched poly(3-hydroxypropionic acid) polymer represented by the following Chemical Formula 1.

[Chemical Formula 1] R-[A-(B)n]ₖ

wherein, in Chemical Formula 1,
R is a trivalent or higher functional group derived from a polyfunctional monomer,
A is a direct bond, or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 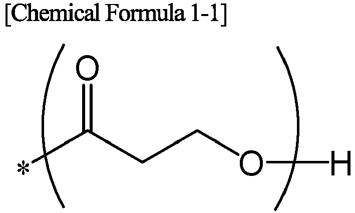 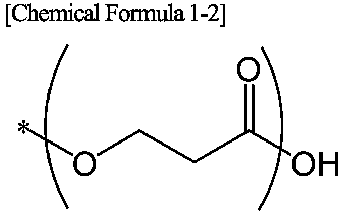
wherein:
   * is a moiety connected to A,
   k is an integer of 3 or more, and
   n is an integer of 1 to 700.

Here, the structure represented by Chemical Formula 1 is similarly applied to the branched poly(3-hydroxypropionic acid)polymer described above, and the specific types, contents, etc. of the monomers forming the polymer are the same as those described above, and thus, detailed description thereof will be omitted here.

When the polymer is prepared by subjecting 3-hydroxypropionic acid and a polyfunctional monomer to a condensation polymerization, the polyfunctional monomer can be contained and polymerized in an amount of 0.1 mol % to 20 mol % with respect to the content of 3-hydroxypropionic acid. When polymerized within the above content range, it is suitable for forming a desired branched structure with an appropriate crosslinked structure in an excellent yield When the content of the polyfunctional monomer is less than 0.1 mol%, it is difficult to form a desired cross-linked structure, and when it exceeds 20 mol%, crosslinking is made in the form of a relatively low molecular weight oligomer, so it is difficult to obtain a high molecular weight polymer, which causes a problem that the reaction time is long and the process efficiency is lowered. Preferably, the content of the polyfunctional monomer may be 0.1 mol% to 15 mol%, 0.5 mol% to 10 mol%, or 1 mol% to 8 mol%, or 0.1 mol% or more, 0.5 mol% or more, or 1.0 mol% or more, or 15 mol% or less, 10 mol% or less, or 8 mol% or less. In this case, the polymer can be formed without the above-mentioned problems.

Further, when the polymer is prepared by subjecting β-propiolactone and a polyfunctional monomer to a ring-opening polymerization, the polyfunctional monomer may be contained and polymerized in an amount of 0.1 mol% to 20 mol% with respect to the content of the β-propiolactone. When polymerized within the above content range, it is suitable for forming a desired branched structure with an appropriate crosslinked structure in an excellent yield. When the content of the polyfunctional monomer is less than 0.1 mol%, it is difficult to form a desired crosslinked structure, and when the content exceeds 20 mol%, crosslinking is made in the form of a relatively low molecular weight oligomer, and thus, it is difficult to obtain a high molecular weight polymer, which causes a problem that the reaction time is long and the process efficiency is lowered. Preferably, the polyfunctional monomer can be used in the content of 0.1 mol% to 15 mol%, 0.5 mol% to 10 mol%, or 1 mol% to 8 mol%, or 0.1 mol% or more, 0.5 mol% or more, or 1.0 mol% or more, or 15 mol% or less, 10 mol% or less, or 8 mol% or less. In this case, the polymer can be formed without the above-mentioned problems.

The polymerization can be performed in the presence of a sulfonic acid-based catalyst and a tin-based catalyst The catalyst has the effect of promoting polymerization of each of 3-hydroxypropionic acid or β-propiolactone and at the same time suppressing the formation of cyclic oligomers during the polymerization process.

Preferably, the sulfonic acid-based catalyst is p-toluenesulfonic acid, m-xylene-4-sulfonic acid, 2-mesitylenesulfonic acid, or p-xylene-2-sulfonic acid. Further, preferably, the tin-based catalyst is SnCl₂ or Sn(oct)₂.

Preferably, the sulfonic acid-based catalyst is used in an amount of 0.001 mol% to 1 mol% relative to 3-hydroxypropionic acid and β-propiolactone. In the above range, it is possible to promote polymerization and at the same time suppress the formation of cyclic oligomers. Preferably, the content of the sulfonic acid-based catalyst may be 0.01 mol% to 0.8 mol%, or 0.02 mol% to 0.5 mol%, 0.01 mol% or more, or 0.02 mol% or more, 0.8 mol% or less, or 0.5 mol% or less.

Preferably, the tin-based catalyst is used in an amount of 0.00025 mol% to 1 mol% relative to 3-hydroxypropionic acid and β-propiolactone, respectively. In the above range, it is possible to promote polymerization and at the same time suppress the formation of cyclic oligomers. Preferably, the amount of the tin-based catalyst may be 0.001 mol% to 0.8 mol%, 0.005 to 0.5 mol%, or 0.01 to 0.3 mol%, 0.001 mol% or more, 0.005 mol% or more, or 0.01 mol% or more, or 0.8 mol% or less, 0.5 mol% or less, or 0.3 mol% or less.

The polymerization reaction can be performed at 80°C to 100°C and 8 mbar to 12 mbar for 110 to 130 minutes, and then the reaction can be performed under vacuum conditions of 10⁻² torr for 4 hours to 26 hours. When melt polymerization is performed under the above conditions, it is possible to suppress the generation of products from side reactions.

More specifically, the oligomerization reaction is performed at 80°C to 100°C and 8 mbar to 12 mbar for 110 minutes to 130 minutes, and then the reaction can proceed under a vacuum condition of 10⁻² torr for 4 hours to 26 hours to form the polymer of Chemical Formula 1.

The subsequent polymerization can be performed at the same temperature as the oligomerization reaction, or it can be performed by raising the temperature to 100°C to 120°C.

Preferably, the reaction is performed at about 90±3°C and about 10±1 mbar for about 120±5 minutes, and then the temperature is raised to the same temperature or about 110±3°C and the reaction is performed under vacuum conditions of about 10⁻² torr. For reference, the reaction subsequent to oligomerization can be appropriately adjusted according to the content range of the polyfunctional monomer used, and when an excessive amount of polyfunctional monomer is used, the reaction time becomes longer and chain transfer may occur as a side reaction, resulting in gelation. The reaction can be performed under appropriate adjustment within about 24 hours.

Meanwhile, if necessary, the 3-hydroxypropionic acid, β-propiolactone and the polyfunctional monomer can be independently pretreated at 30°C to 100°C and 30 mbar to 150 mbar prior to polymerization. Through the pretreatment step, it is possible to remove the water present in 3-hydroxypropionic acid and the polyfunctional monomer.

### (Branched poly(3-hydroxypropionic acid)copolymer)

Further, according to another embodiment of the present disclosure, there is provided a branched poly(3-hydroxypropionic acid)copolymer comprising a branched poly(3-hydroxypropionic acid) polymer structure represented by the above-mentioned Chemical Formula 1.

More specifically, the terminal functional group contained in the branched poly(3-hydroxypropionic acid)polymer represented by Chemical Formula 1 can be further polymerized with a comonomer to form a copolymer.

The terminal functional group is derived from a polyfunctional monomer, 3-hydroxypropionic acid, and β-propiolactone that are used in the preparation of the branched poly(3-hydroxypropionic acid)polymer represented by Chemical Formula 1, and means a terminal functional group (e.g. -OH, -COOH) capable of further polymerization reaction.

Further, the type of the copolymerized comonomer is not particularly limited as long as it is a monomer capable of reacting with the above-terminal functional group, and an example thereof may be an ester-based comonomer. Specifically, glycolate, lactic acid, hydroxybutyrate, hydroxyvalerate, hydroxypentanoate, hydroxyoctanoate, a lactone-based compound, and the like may be used, but is not limited thereto.

The method for polymerizing the copolymer may be appropriately selected according to the type of comonomer used, and all polymerization methods conventionally known in the technical field can be applied without particular limitation.

### (Article)

In addition, according to another embodiment of the present disclosure, an article comprising the novel branched poly(3-hydroxypropionic acid)polymer is provided.

The article may include a packaging material, a film, a nonwoven fabric, and the like, and can be applied to the article, thereby having excellent elongation properties and at the same time compensating for brittleness.

### [Advantageous Effects]

As described above, the branched poly(3-hydroxypropionic acid)polymer and the preparation method thereof according to the present disclosure can effectively prepare a polymer that achieves excellent production yield while maintaining the intrinsic physical properties of poly(3-hydroxypropionic acid).

### [DETAILED DESCRIPTION OF THE EMBODIMENTS]

Hereinafter, embodiments of the present disclosure will be described in more detail with reference to examples. However, the following examples are merely illustrative of embodiments of the present invention, and the scope of the present disclosure is not limited thereby.

### <Examples and Comparative Examples>

### Example 1

3-hydroxypropionic acid (3HP) and glycerol dissolved in water were added to RBF, and water was dried at 90°C and 100 torr for 2 hours.

70 g of dried 3-hydroxypropionic acid (3HP) and 7.156 g of glycerol (10 mol% relative to 3HP) were added to a reactor, and an oligomerization reaction was performed using 295.6 mg of p-TSA (0.2 mol% relative to 3HP) as a catalyst at 90°C at 10 mbar for 2 hours. An additional polymerization reaction was performed for 5 hours while adding (t=5) 157.4 mg of SnCl₂ (0.05 mol% relative to 3HP) as a co-catalyst under a vacuum degree of 0.1 torr to prepare a branched copolymer .

### Example 2

A branched copolymer was prepared in the same manner as in Example 1, except that in Example 1, total polymerization time including oligomerization reaction was set to 10 hours.

### Examples 3 to 5

A branched copolymer was prepared in the same manner as in Example 1, except that in Example 1, the content of glycerol was used in an amount of 5 mol% relative to 3HP, and the total polymerization time including the oligomerization reaction was set to 7 hours (Example 3), 10 hours (Example 4), and 22 hours (Example 5).

### Examples 6 to 8

A branched copolymer was prepared in the same manner as in Example 1, except that in Example 1, the content of glycerol was used in an amount of 1 mol% relative to 3HP, and the total polymerization time including the oligomerization reaction was set to 7 hours (Example 6), 10 hours (Example 7), and 20 hours (Example 8).

### Examples 9 to 11

A branched copolymer was prepared in the same manner as in Example 1, except that in Example 1, the content of glycerol was used in an amount of 0.5 mol% relative to 3HP, and the total polymerization time including the oligomerization reaction was set to 7 hours (Example 9), 10 hours (Example 10), and 24 hours (Example 11).

### Comparative Example 1

3-Hydroxypropionic acid (3HP) and glycerol dissolved in water were added to RBF, and water was dried at 90°C and 100 torr for 2 hours.

60 g of dried 3-hydroxypropionic acid (3HP) was added to a reactor, and an oligomerization reaction was performed using 295.6 mg of p-TSA (0.2 mol% relative to 3HP) as a catalyst at 90°C and 10 mbar for 2 hours. An additional polymerization reaction was performed for 5 hours while adding SnCl₂ (0.05 mol% relative to 3HP) as a co-catalyst under a vacuum degree of 0.1 torr (t=5) to prepare a copolymer.

### Comparative Example 2 and 3

A copolymer was prepared in the same manner as in Comparative Example 1, except that in Comparative Example 1, the total polymerization time including the oligomerization reaction was set to 10 hours (Comparative Example 2) and 24 hours (Example 3).

### <Experimental Example>

The characteristics of the copolymers prepared in Examples and Comparative Examples were evaluated as follows.

### 1) Evaluation of GPC (gel permeation chromatography) molecular weight

For each step copolymer prepared in Examples and Comparative Examples, the molecular weight was evaluated using Water e2695 model device and Agilent Plgel mixed c and b column. The sample was prepared at 4 mg/ml and chloroform was prepared as a solvent, and 20 ul was injected. The weight average molecular weight, number average molecular weight, and polydispersity index were measured by gel permeation chromatography (GPC, Tosoh ECO SEC Elite), and the results are shown in Table 1 below.
Solvent: chloroform (eluent)
Flow rate: 1.0 ml/min
Column temperature: 40°C
Standard: Polystyrene (corrected by cubic function)

**[TABLE 1]**

| Category | Molecular weight properties | | |
|---|---|---|---|
| | Mn | Mw | PDI |
| Example 1 | 1,000 | 1,900 | 1.85 |
| Example 2 | 1,100 | 2,700 | 2.39 |
| Example 3 | 1,700 | 7,600 | 4.53 |
| Example 4 | 1,900 | 10,000 | 5.13 |
| Example 5 | 1,800 | 23,000 | 12.48 |
| Example 6 | 1,100 | 6,400 | 5.84 |
| Example 7 | 1,200 | 9,500 | 7.78 |
| Example 8 | 1,300 | 16,000 | 12.55 |
| Example 9 | 5,300 | 16,000 | 3.08 |
| Example 10 | 4,600 | 21,000 | 4.47 |
| Example 11 | 5,500 | 39,000 | 7.13 |
| Comparative Example 1 | 5,000 | 8,000 | 1.6 |
| Comparative Example 2 | 10,000 | 20,000 | 2 |
| Comparative Example 3 | 12,000 | 32,000 | 2.5 |

### 2) Evaluation of DSC (differential scanning calorimetry) thermal properties

Thermal characteristics (Tg, Tm, cold crystallization (2nd heating result), and Tc (1st cooling result)) of each step copolymer prepared in Examples and Comparative Examples were measured in a nitrogen gas flow state using TA DSC250 model device, and the results are shown in Table 2 below.
Raise the temperature from 40°C to 190°C at 10°C/min (1st heating) / Maintain the temperature at 190°C for 10 minutes
Cooling from 190°C to 60°C at 10°C/min (1st cooling)/ Maintaining the temperature at - 60°C for 10 minutes
Raise the temperature from -60°C to 190°C at 10°C/min (2^{nd} heating)

**[TABLE 2]**

| Category | Polymer thermal properties | | | | | | |
|---|---|---|---|---|---|---|---|
| | Tc | | Tg | Cold crystallization | | Tm | |
| | Temperature (°C) | ΔH (J/g) | Temperature (°C) | Temperature (°C) | ΔH (J/g) | Temperature (°C) | ΔH (J/g) |
| Example 1 | ND | ND | -34.5 | N.D | N.D | N.D | N.D |
| Example 2 | ND | ND | -30.4 | N.D | N.D | N.D | N.D |
| Example 3 | 8.8 | 17.7 | -27 | 13.7 | 19.7 | 50.3 | 41.3 |
| Example 4 | 11.5 | 4.5 | -24.2 | 28.5 | 10.5 | 55.4 | 16.1 |
| Example 5 | 12.0 | 14.7 | -25.8 | 17.9 | 20.5 | 52.5 | 37.3 |
| Example 6 | 26.4 | 60.0 | -19.4 | N.D | N.D | 67.3 | 63.3 |
| Example 7 | 35.5 | 56.7 | -18.4 | N.D | N.D | 70.5 | 59.8 |
| Example 8 | 36.4 | 61.9 | -17.9 | N.D | N.D | 68.6 | 64.7 |
| Example 9 | 33.8 | 62.6 | -16.4 | N.D | N.D | 73.3 | 66.7 |
| Example 10 | 37.4 | 61.2 | -16.9 | N.D | N.D | 73.2 | 62.6 |
| Example 11 | 37.4 | 59.7 | -15.9 | N.D | N.D | 73.9 | 59.8 |
| Comparative Example 1 | 28 | 61.5 | -27 | N.D | N.D | 67 | 71 |
| Comparative Example 2 | 34 | 64.5 | -26 | N.D | N.D | 69 | 68.6 |
| Comparative Example 3 | 32 | 65.2 | -20 | N.D | N.D | 71.9 | 69.4 |

Generally, as the crystallization rate is higher, the enthalpy of Tc is larger, and the cold crystallization is absent or less. Further, as the crystallinity is higher, the Tm enthalpy is larger. In addition, it can be confirmed that if the degree of crystallinity is high, the strength of the material increases, but it is brittle and has no elasticity, whereas in the case of the branch structure as in the present disclosure, the brittle characteristics can be lowered by lowering the crystallinity.

More specifically, as seen in Tables 1 and 2, it is confirmed that as the content of the brancher increases in the same molecular weight range (Comparative Example 1, Example 3, Example 6), cold crystallization is observed, showing a trend of decreasing temperature and enthalpy values of Tc. Therefore, it can be confirmed that the enthalpy values of Tm are lowered.

It can be confirmed that when branched structure is contained in an amount of 5 mol% as in Examples 3 to 5, the best effect is exhibited. However, if branched structure is contained in an excessive amount, it may be difficult to observe crystallinity, and if it is contained in a small amount, it may exhibit thermal characteristics similar to those of Linear, making it difficult to achieve the desired expected effect.

## Claims

1. A branched poly(3-hydroxypropionic acid)polymer represented by the following Chemical Formula 1:
[Chemical Formula 1] R-[A-(B)n]ₖ
wherein, in Chemical Formula 1,
R is a trivalent or higher functional group derived from a polyfunctional monomer,
A is a direct bond, or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 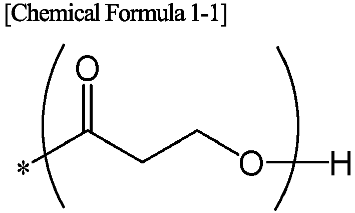 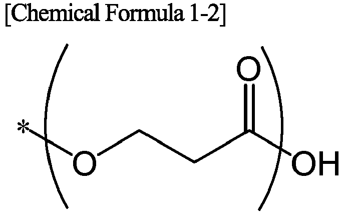
wherein,
* is a moiety connected to A,
k is an integer of 3 or more, and
n is an integer of 1 to 700.

2. The branched poly(3-hydroxypropionic acid)polymer according to claim 1 wherein:
R is a trivalent or higher linking group derived from a substituted or unsubstituted C₁₋₆₀ alkyl, a substituted or unsubstituted C₃₋₆₀ cycloalkyl, a substituted or unsubstituted C₆₋₆₀ aryl or a substituted or unsubstituted C₂₋₆₀ heteroaryl containing at least one of N, O and S, wherein at least one of the carbon atoms of the alkyl, cycloalkyl, aryl and heteroaryl is unsubstituted or substituted with at least one heteroatom selected from the group consisting of N, O and S, or carbonyl.

3. The branched poly(3-hydroxypropionic acid)polymer according to claim 1 wherein:
the polymer is obtained by subjecting 3-hydroxypropionic acid and a polyfunctional monomer to a condensation polymerization, or is obtained by subjecting β-propiolactone and a polyfunctional monomer to a ring-opening polymerization.

4. The branched poly(3-hydroxypropionic acid)polymer according to claim 3 wherein:
the polyfunctional monomer is selected from the group consisting of glycerol, pentaerythritol, 3-arm-poly(ethyleneglycol)_{n=2~15}, 4-arm-poly(ethyleneglycol)_{n=2~10}, di(trimethylolpropane), tripentaerythritol, xylitol, sorbitol, inositol, cholic acid, β -cyclodextrin, tetrahydroxyperylene, 2,2'-bis(hydroxymethyl)butyric acid (BHB), pyridinetetraamine (PTA), diethyltriaminepentaacetic acid, melamine, propane-1,2,3-triamine, tetraacetylene pentaamine, benzene-1,3,5-triamine, toluene-2,4,6-triisocyanate, 2-isocyanatoethyl-2,6-diisocyanatocaproate, triphenyl ethane-4,4,4-triisocyanate, trimethylolpropane, triethanolamine, triglycidyl and s-triazine-1,3,5-triethanol ether.

5. The branched poly(3-hydroxypropionic acid)polymer according to claim 1 wherein:
a weight average molecular weight is 1,000 to 100,000.

6. The branched poly(3-hydroxypropionic acid)polymer according to claim 1 wherein:
a number average molecular weight is 1,000 to 100,000.

7. The branched poly(3-hydroxypropionic acid)polymer according to claim 1 wherein:
a polydispersity index is 1.80 to 13.0.

8. A branched poly(3-hydroxypropionic acid)copolymer comprising the branched poly(3-hydroxypropionic acid) polymer structure of any one of claims 1 to 7.

9. A method for preparing a branched poly(3-hydroxypropionic acid)copolymer, the method comprising polymerizing 3-hydroxypropionic acid or β-propiolactone with a polyfunctional monomer to prepare a branched poly(3-hydroxypropionic acid) polymer represented by the following Chemical Formula 1.
[Chemical Formula 1] R-[A-(B)n]ₖ
wherein, in Chemical Formula 1,
R is a trivalent or higher functional group derived from a polyfunctional monomer,
A is a direct bond, or a linking group derived from ether, sulfide, ester, thioester, ketone, sulfoxide, sulfone, sulfonate ester, amine, amide, imine, imide, or urethane,
B is a substituent represented by the following Chemical Formula 1-1 or Chemical Formula 1-2, 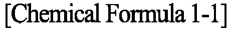 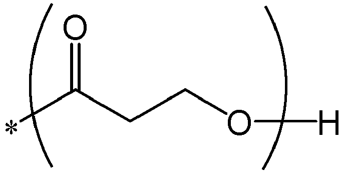 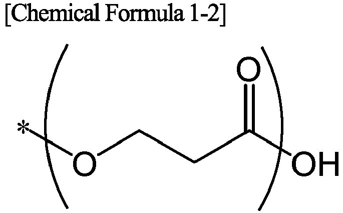
wherein:
* is a moiety connected to A,
k is an integer of 3 or more, and
n is an integer of 1 to 700.

10. The method for preparing a branched poly(3-hydroxypropionic acid)copolymer according to claim 9 wherein:
the polyfunctional monomer is selected from the group consisting of glycerol, pentaerythritol, 3-arm-poly(ethyleneglycol)_{n=2~15}, 4-arm-poly(ethyleneglycol)_{n=2~10}, di(trimethylolpropane), tripentaerythritol, xylitol, sorbitol, inositol, cholic acid, β -cyclodextrin, tetrahydroxyperylene, 2,2'-bis(hydroxymethyl)butyric acid (BHB), pyridinetetraamine (PTA), diethyltriaminepentaacetic acid, melamine, propane-1,2,3-triamine, tetraacetylene pentaamine, benzene-1,3,5-triamine, toluene-2,4,6-triisocyanate, 2-isocyanatoethyl-2,6-diisocyanatocaproate, triphenyl ethane-4,4,4-triisocyanate, trimethylolpropane, triethanolamine, triglycidyl and s-triazine-1,3,5-triethanol ether.

11. The method for preparing a branched poly(3-hydroxypropionic acid)copolymer according to claim 9 wherein:
when the branched poly(3-hydroxypropionic acid)polymer is prepared by subjecting 3-hydroxypropionic acid and a polyfunctional monomer to a condensation polymerization,
the polyfunctional monomer is contained in an amount of 0.1 mol% to 20 mol% with respect to the content of 3-hydroxypropionic acid.

12. The method for preparing a branched poly(3-hydroxypropionic acid)copolymer according to claim 9 wherein:
when the branched poly(3-hydroxypropionic acid)polymer is prepared by subjecting β-propiolactone and a polyfunctional monomer to a ring-opening polymerization,
the polyfunctional monomer is contained in an amount of 0.1 mol% to 20 mol% with respect to the content of β-propiolactone.

13. The method for preparing a branched poly(3-hydroxypropionic acid)copolymer according to claim 9 wherein:
the polymerization is performed at 80°C to 100 °C and 8mbar to 12mbar for 110 to 130 minutes, and then is performed under vacuum conditions of 10⁻² torr for 4 to 26 hours.

14. The method for preparing a branched poly(3-hydroxypropionic acid)copolymer according to claim 9 wherein:
the polymerization is performed in the presence of a sulfonic acid-based catalyst and a tin-based catalyst.

15. The method for preparing a branched poly(3-hydroxypropionic acid)copolymer according to claim 9 wherein:
the sulfonic acid-based catalyst is contained in an amount of 0.001 mol% to 1 mol% relative to the content of each of 3-hydroxypropionic acid or β-propiolactone, and
the tin-based catalyst is contained in an amount of 0.00025 mol% to 1 mol% based on the content of each of 3-hydroxypropionic acid or β-propiolactone.

16. The method for preparing a branched poly(3-hydroxypropionic acid)copolymer according to claim 9 wherein:
the 3-hydroxypropionic acid, β-propiolactone and polyfunctional monomer are each independently pretreated at 30°C to 100°C and 30 mbar to 150 mbar prior to polymerization.
